# EUROPÄISCHE PATENTSCHRIFT

(11) **EP 3 363 403 B1**
(45) Veröffentlichungstag und Bekanntmachung des Hinweises auf die Patenterteilung: **20.11.2019**
(21) Anmeldenummer: 18152328.3
(22) Anmeldetag: 18.01.2018
(51) Int. Cl.: A61C 3/02

(54) **DENTALINSTRUMENT, INSBESONDERE FÜR DIE PRÄPARATION VON OKKLUSALEN KAUFLÄCHEN**
DENTAL INSTRUMENT, IN PARTICULAR FOR THE PREPARATION OF OCCLUSAL SURFACES
INSTRUMENT DENTAIRE, EN PARTICULIER POUR LA PRÉPARATION DE SURFACES DE MASTICATION OCCLUSALES

(30) Priorität: 15.02.2017 DE 102017202407
(43) Veröffentlichungstag der Anmeldung: 22.08.2018
(73) Patentinhaber: Gebr. Brasseler GmbH & Co. KG, 32657 Lemgo (DE)
(72) Erfinder: AHLERS, M. Oliver, 22587 Hamburg (DE); EDELHOFF, Daniel, 82152 Planegg (DE)
(74) Vertreter: Hoefer & Partner Patentanwälte mbB

(56) Entgegenhaltungen:
- DE-U1- 8 101 875
- DE-U1- 20 100 242
- JP-A- 2012 085 884
- US-A1- 2010 047 738
- US-B1- 6 186 788

## Beschreibung

Die Erfindung betrifft ein rotierbares Dentalinstrument, insbesondere für die Präparation der okklusalen Kauflächen von Molaren oder Prämolaren.

In jüngster Zeit gewinnen vollkeramische indirekte Restaurationen enorm an Bedeutung. Hierbei werden bei Molaren oder Prämolaren an den Kauflächen hochfeste Dentalkeramik-Kronen oder Dentalkeramik-Okklusionsonlays verwendet. Hierbei muss eine entsprechende Vorpräparation des Zahnes, insbesondere dessen Kaufläche, vorgenommen werden. Hierbei sollten weniger invasive Präparationsformen eingesetzt werden, welche weniger Schleif- und Eingliederungstraumata verursachen und so ein Pulpitisrisiko reduzieren. Hierbei sei angemerkt, dass postoperative Pulpitiden das Hauptrisiko bei Teilkronen und Vollkronen sind. Die bisher bekannten Bearbeitungsverfahren setzen dabei eine Vielzahl von unterschiedlichen Werkzeugen ein, was mit entsprechend vielen Werkzeugwechseln begleitet ist. Ferner sind bei vorwiegend auf den Kauflächenbereich beschränkten Defekten des Zahns minimalinvasive Restaurationen in Form von Okklusionsonlays, welche auch als Tabletops bezeichnet werden, sinnvoll. Deren Präparation fällt mit den herkömmlichen Präparationsinstrumenten jedoch schwer.

Ferner zeigt die JP 2012-085884 A ein Dentalinstrument mit konvexen und konkaven Bereichen im Arbeitsbereich. Aus der DE 201 00 242 U1 ist weiterhin ein Schneidwerkzeug für zahntechnische Anwendungen bekannt, welches einen Schleifbereich mit großem Durchmesser und einen Schleifbereich mit kleinem Durchmesser aufweist.

Es ist daher Aufgabe der vorliegenden Erfindung, ein Dentalinstrument bereitzustellen, welches bei einfachem Aufbau und einfacher, kostengünstiger Herstellbarkeit insbesondere okklusale Kauflächen von Prämolaren und Molaren in kurzer Zeit und ohne Werkzeugwechsel bearbeiten kann.

Diese Aufgabe wird durch ein Dentalinstrument mit den Merkmalen des Anspruchs 1 gelöst. Die Unteransprüche zeigen bevorzugte Weiterbildungen der Erfindung.

Das rotierbare Dentalinstrument mit den Merkmalen des Anspruchs 1 ermöglicht dabei, okklusale Kauflächen ohne Werkzeugwechsel vollständig zu bearbeiten. Dabei sind auch minimalinvasive Restaurationen mit reduzierten Schleiftraumata und Eingliederungstraumata möglich. Insbesondere kann eine Kaufläche eines Zahnes ohne Werkzeugwechsel bearbeitet werden. Hierbei umfasst das rotierbare Dentalinstrument einen Arbeitsbereich und einen Schaft. Der Arbeitsbereich ist mit abrasiven Partikeln belegt. Der Arbeitsbereich umfasst dabei insgesamt vier geometrisch unterschiedlich ausgebildete Bereiche. Hierbei umfasst der Arbeitsbereich eine abgerundete Spitze mit einem ersten Radius, eine sich an die abgerundete Spitze anschließenden ersten konkaven Bereich mit einem zweiten Radius, einen sich an den ersten konkaven Bereich anschließenden konvexen Bereich mit einem dritten Radius und einen sich an den konvexen Bereich anschließenden zweiten konkaven Bereich mit einem vierten Radius. Hierbei schließt sich der Schaft 3 an den zweiten konkaven Bereich an. Ferner weist das Dentalinstrument genau einen konvexen Bereich und genau zwei konkave Bereiche auf. Durch die abgerundete Spitze können insbesondere Vertiefungen in der Kaufläche ohne Erzeugung unerwünschter Nuten oder dergleichen in der Kaufläche erreicht werden. Der konvexe Bereich ermöglicht eine Bearbeitung insbesondere einer mittigen Vertiefung der Kaufläche. Die beiden konkaven Bereiche ermöglichen eine exzellente Bearbeitung von Übergangsbereichen auf der Kaufläche, insbesondere Übergängen innerhalb der Kaufläche, beispielsweise von der zentralen Vertiefung zu den erhöhten Randbereichen der okklusalen Kaufläche. Vorzugsweise können sich bei der Präparation der Kauflächen auch zwei oder drei Bereiche des Dentalinstruments gemeinsam im Eingriff befinden. Ferner ist ein größter Durchmesser des Dentalinstruments am konvexen Bereich angeordnet. Hierdurch ergibt sich in etwa eine Keulenform des Dentalinstruments, wodurch auf einfache Weise eine Bearbeitung von tieferen Bereichen auf einer Kaufläche eines Prämolaren oder Molaren möglich ist. Weiter ist der größte Durchmesser an der Mitte des Arbeitsbereichs des Dentalinstruments in Axialrichtung des Dentalinstruments angeordnet.

Weiter bevorzugt ist der größte Durchmesser in Axialrichtung des Dentalinstruments mittig am konvexen Bereich angeordnet.

Weiter bevorzugt ist die abgerundete Spitze des Dentalinstruments eine Halbkugel. Hierdurch kann insbesondere eine kantenfreie Präparation der okklusalen Kaufläche erreicht werden.

Weiter bevorzugt ist ein Enddurchmesser des Arbeitsbereichs an dem von der abgerundeten Spitze abgewandten Ende des Arbeitsbereichs größer als ein Durchmesser der abgerundeten Spitze. Dadurch kann insbesondere ohne Kontakt der abgerundeten Spitze mit der Kaufläche eine Präparation durch den zweiten konkaven Bereich des Arbeitsbereichs des Dentalinstruments erfolgen.

Weiter bevorzugt ist der erste Radius der abgerundeten Spitze kleiner als der zweite Radius, der dritte Radius und der vierte Radius.

Weiter bevorzugt erfolgt ein Übergang zwischen den vier Bereichen des Arbeitsbereichs ohne Kanten, d. h. ein tangentialer Übergang wird zwischen der abgerundeten Spitze und dem ersten konkaven Bereich, dem ersten konkaven Bereich und dem konvexen Bereich und dem konvexen Bereich und dem zweiten konkaven Bereich ist vorhanden.

Weiter bevorzugt liegt der erste Radius in einem Bereich von 0,5 mm bis 0,75 mm, der zweite Radius in einem Bereich von 6,5 mm bis 16 mm, der dritte Radius in einem Bereich von 1,5 mm bis 3,5 mm und der vierte Radius in einem Bereich von 5 mm bis 15 mm. Weiter bevorzugt ist eine Gesamtaxiallänge des Arbeitsbereichs in einem Bereich zwischen 5,0 mm bis 12,5 mm und insbesondere zwischen 7,5 mm bis 10,5 mm. Gemäß einer weiteren bevorzugten Ausgestaltung der Erfindung ist ein maximaler Durchmesser des Arbeitsbereichs in einem Bereich von 1,8 mm bis 4,5 mm, insbesondere zwischen 2,3 mm und 3,5 mm.

Weiter bevorzugt sind die abrasiven Partikel auf dem Arbeitsbereich Diamantpartikel oder Hartmetallpartikel. Weiter bevorzugt weisen die Diamantpartikel oder die Hartmetallpartikel eine mittlere Korngröße von 115 µm auf.

Weiter bevorzugt ist eine Axiallänge des ersten konkaven Bereichs und des zweiten konkaven Bereichs gleich. Vorzugsweise sind auch die Radien des ersten und zweiten konkaven Bereichs gleich. Alternativ weisen bevorzugt der Radius des ersten konkaven Bereichs und der Radius des zweiten konkaven Bereichs einen Längenunterschied in Axialrichtung von ca. 1 mm auf.

Nachfolgend werden unter Bezugnahme auf die begleitenden Zeichnungen bevorzugte Ausführungsbeispiele der Erfindung im Detail beschrieben. In den Ausführungsbeispielen sind gleiche bzw. funktional gleiche Teile mit den gleichen Bezugszeichen bezeichnet. In den Zeichnungen ist:
- Fig. 1: eine schematische Seitenansicht eines rotierbaren Dentalinstruments gemäß einem ersten Ausführungsbeispiel der Erfindung,
- Fig. 2: eine schematische Darstellung des Dentalinstruments von Fig. 1 bei der Präparation einer okklusalen Kaufläche, und
- Fig. 3: eine schematische Seitenansicht eines rotierbaren Dentalinstruments gemäß einem zweiten Ausführungsbeispiel der Erfindung.

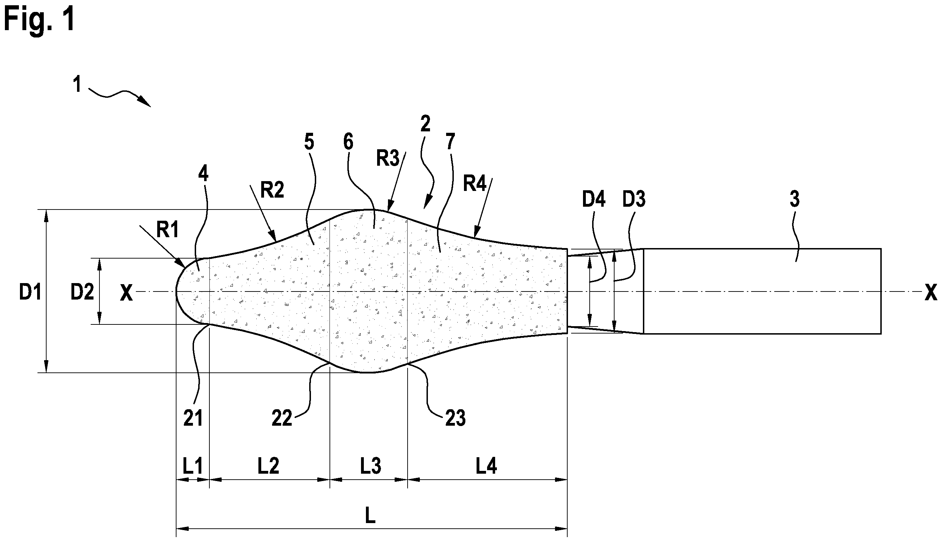

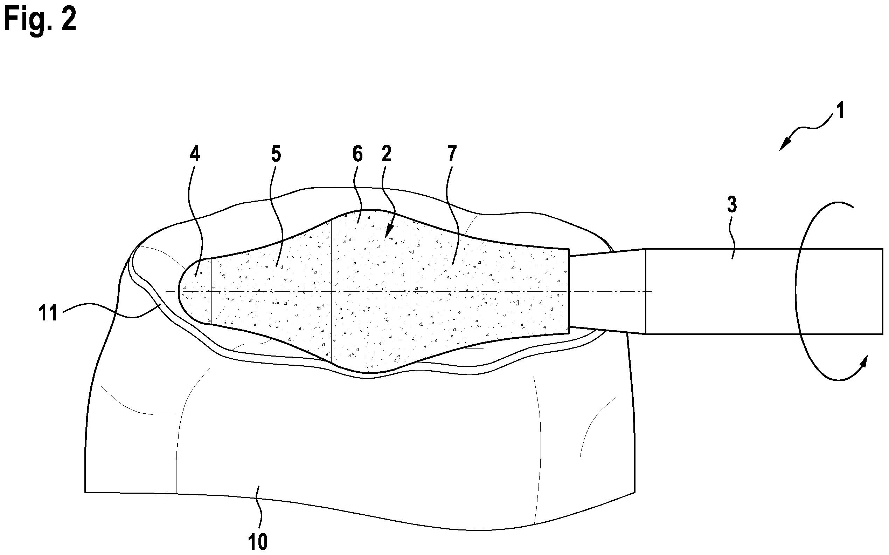

Nachfolgend wird unter Bezugnahme auf die Fig. 1 und 2 ein rotierbares Dentalinstrument 1 gemäß einem ersten bevorzugten Ausführungsbeispiel der Erfindung im Detail beschrieben. Wie aus Fig. 1 ersichtlich ist, umfasst das rotierbare Dentalinstrument 1 einen Arbeitsbereich 2 und einen Schaft 3. Der Arbeitsbereich 2 weist eine Vielzahl von abrasiven Partikeln auf. Die abrasiven Partikel sind vorzugsweise Diamantpartikel oder Hartmetallpartikel. Eine mittlere Korngröße liegt in einem Bereich von 115 µm.

Die abrasiven Partikel weisen eine geometrisch unbestimmte Schneide auf, sodass das rotierbare Dentalinstrument auch als Schleifer bezeichnet werden kann. Das Dentalinstrument ist insbesondere zur Bearbeitung von okklusalen Kauflächen im Rahmen einer Kronen- und Okklusionsonlay-Präparation vorgesehen.

Eine Korngröße der abrasiven Partikel kann grob, mittel oder fein sein.

Der Arbeitsbereich 2 des Dentalinstruments 1 umfasst insgesamt vier Bereiche. Genauer umfasst der Arbeitsbereich 2 eine abgerundete Spitze 4, einen sich an die abgerundete Spitze 4 anschließenden ersten konkaven Bereich 5, einen sich an den ersten konkaven Bereich 5 anschließenden konvexen Bereich 6 und einen sich an den konvexen Bereich 6 anschließenden zweiten konkaven Bereich 7.

Wie aus Fig. 1 ersichtlich ist, sind hierbei kantenfreie Übergänge zwischen den einzelnen Unterbereichen des Arbeitsbereichs 2 vorgesehen. Genauer ist ein erster Übergang 21 zwischen der abgerundeten Spitze 4 und dem ersten konkaven Bereich 5 vorgesehen. Ein zweiter Übergang 22 ist zwischen dem ersten konkaven Bereich 5 und dem konvexen Bereich 6 vorgesehen. Ein dritter Übergang 23 ist zwischen dem konvexen Bereich 6 und dem zweiten konkaven Bereich 7 vorgesehen. Die drei Übergänge sind jeweils als tangentiale Übergänge ausgebildet, sodass der Arbeitsbereich 2 keine Kante an diesen Übergängen aufweist.

Wie weiter aus Fig. 1 ersichtlich ist, ist ein maximaler Durchmesser D1 am konvexen Bereich 6 gebildet. Der maximale Durchmesser D1 liegt dabei mittig zwischen dem zweiten Übergang 22 und dem dritten Übergang 23.

Die abgerundete Spitze 4 weist einen zweiten Durchmesser D2 auf, welcher deutlich kleiner als der erste Durchmesser D1 ist. Die abgerundete Spitze 4 ist in diesem Ausführungsbeispiel eine Halbkugel. Die Halbkugel geht dann ohne Kante unmittelbar in den ersten konkaven Bereich 5 über.

Die abgerundete Spitze 4 weist einen ersten Radius R1 auf. Der erste konkave Bereich 5 weist einen zweiten Radius R2, der konvexe Bereich 6 einen dritten Radius R3 und der zweite konkave Bereich 7 einen vierten Radius R4 auf. Der erste Radius R1 ist dabei der kleinste der Radien des Arbeitsbereichs 2.

Der zweite Radius R2 ist vorzugsweise gleich dem vierten Radius R4.

Der zweite Durchmesser D2 der abgerundeten Spitze 4 ist dabei kleiner wie ein dritter Durchmesser D3 an einem zum Schaft 3 gerichteten Ende des Arbeitsbereichs 2. Hierdurch kann insbesondere eine sehr gute Präparation mit dem zweiten konkaven Bereich 7 ermöglicht werden, da durch den kleineren Durchmesser D2 der Spitze 4 vermieden wird, dass die Spitze 4 ungewollt an den zu bearbeitenden Werkstoff anstößt.

Wie weiter aus Fig. 1 ersichtlich ist, ist ein vierter Durchmesser D4 des Schafts 3 kleiner als der dritte Durchmesser D3. Hierdurch wird vermieden, dass bei einer Präparation mittels des zweiten konkaven Bereichs 7 der Schaft 3 in unerwünschten Kontakt mit dem zu bearbeitenden Werkstoff kommt.

Der Schaft 3 ist eingerichtet, mit einem Antrieb (nicht gezeigt) verbunden zu werden, um während der Präparation das Dentalinstrument 1 in einen rotierenden Zustand zu versetzen. Im ersten Ausführungsbeispiel ist der maximale Durchmesser D1 2,3 mm und eine Länge des Arbeitsbereichs 2 in Axialrichtung X-X beträgt 7,5 mm.

Eine erste Länge L1 der abgerundeten Spitze 4 in Axialrichtung X-X ist kleiner als eine zweite Länge L2 des ersten konkaven Bereichs 5, als eine dritte Länge L3 des konvexen Bereichs 6 und als eine vierte Länge L4 des zweiten konkaven Bereichs 7. Ferner sind die zweite Länge L2 und die vierte Länge L4 ungefähr gleich lang. Die dritte Länge L3 ist kleiner als die zweite Länge L2 und die vierte Länge L4.

Im ersten Ausführungsbeispiel ist ferner ein erster Radius R1 0,64 mm, der zweite Radius R2 8 mm, der dritte Radius R3 2,3 mm und der vierte Radius R4 8 mm. Es sei angemerkt, dass vorzugsweise der erste Durchmesser D1 dieses Ausführungsbeispiels in einem Bereich von 1,8 bis 2,7 mm liegt, die Axiallänge L in einem Bereich von 5 bis 9,5 mm liegt, der erste Radius R1 in einem Bereich von 0,5 bis 0,75 mm liegt, der zweite Radius R2 in einem Bereich von 6,5 bis 9,5 mm liegt, der dritte Radius R3 in einem Bereich von 1,5 bis 3,5 mm liegt und der vierte Radius R4 in einem Bereich von 5 bis 10 mm liegt.

Somit kann mittels des erfindungsgemäßen Dentalinstruments 1 eine Bearbeitung einer okklusalen Kaufläche ohne Werkzeugwechsel durchgeführt werden. Hierbei können insbesondere tiefe Bereiche der Kaufläche mittels des konvexen Bereichs 6 bearbeitet werden. Übergangsbereiche der Kaufläche können mittels des ersten und zweiten konkaven Bereichs 5 und 7 bearbeitet werden. Die abgerundete Spitze 4 dient zur Bearbeitung von vertieften Bereichen der Kaufläche. Durch die tangentialen Übergänge zwischen den vier Teilbereichen kann vermieden werden, dass bei der Präparation unerwünschte Kanten oder Rillen oder dergleichen präpariert werden.

Fig. 2 zeigt das Dentalinstrument 1 während eines Präparationsvorgangs einer okklusalen Kaufläche 11 auf einem Zahn 10. Bei diesem Präparationsvorgang wird gerade eine Vertiefung auf einer Kaufläche eines Zahnes mit dem konvexen Bereich 6 bearbeitet. Wie aus Fig. 2 ersichtlich ist, ist durch die geometrische Gestaltung des Dentalinstruments 1 dabei sichergestellt, dass nur der konvexe Bereich bzw. ein Teilbereich des konvexen Bereichs 6 sich im Eingriff mit dem Werkstoff befindet und die anderen drei Unterbereiche des Arbeitsbereichs 2 sich außer Eingriff mit der Krone befinden.

Es sei angemerkt, dass durch eine leichte Neigung des Dentalinstruments 1 auch beispielsweise zwei Bereiche des Dentalinstruments mit der Kaufläche 11 in Eingriff treten können, so dass eine gemeinsame Bearbeitung durch zwei Bereiche am Dentalinstrument möglich ist.

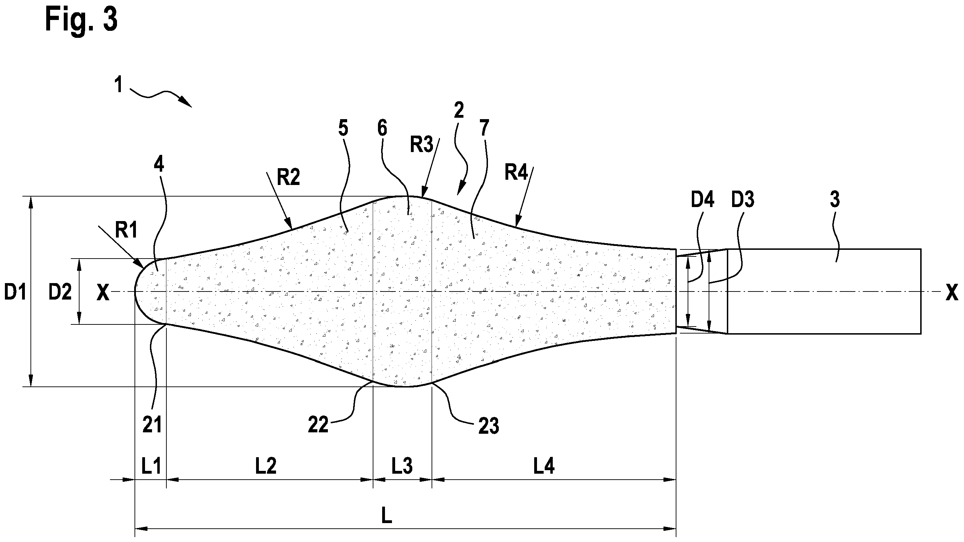

Fig. 3 zeigt ein rotierbares Dentalinstrument 1 gemäß einem zweiten Ausführungsbeispiel der Erfindung. Wie aus Fig. 3 ersichtlich ist, weist das Dentalinstrument 1 des zweiten Ausführungsbeispiels einen Arbeitsbereich 2 auf, welcher wie im ersten Ausführungsbeispiel eine keulenartige Gestalt hat, diese jedoch in Axialrichtung X-X etwas gestreckt ist. Dies wird durch das Vorsehen von längeren ersten und zweiten konkaven Bereichen 5, 7 erreicht. Weiterhin ist hierbei eine vierte Länge L4 des zweiten konkaven Bereichs 7 etwas größer als eine zweite Länge L2 des ersten konkaven Bereichs 5. Ferner ist der zweite Radius R2 etwas größer als der vierte Radius R4. Genauer ist in diesem Ausführungsbeispiel der zweite Radius R2 um ca. 10 % größer als der vierte Radius R4.

Wie im ersten Ausführungsbeispiel sind beim zweiten Ausführungsbeispiel zwischen den Unterbereichen jeweils wieder drei tangentiale Übergänge 21, 22, 23 ausgebildet. Das Dentalinstrument des zweiten Ausführungsbeispiels weist vorzugsweise eine Länge L des Arbeitsbereichs 2 in Axialrichtung X-X in einem Bereich von 8,5 mm bis 12,5 mm auf und beträgt vorzugsweise 10,5 mm. Weiter ist ein erster Radius R1 vorzugsweise in einem Bereich von 0,5 mm bis 0,75 mm und beträgt bevorzugt 0,62 mm. Ferner bevorzugt ist ein zweiter Radius R2 in einem Bereich von 9,5 mm bis 16 mm und beträgt bevorzugt 13 mm. Weiter bevorzugt ist ein dritter Radius R3 in einem Bereich von 1,5 mm bis 3,5 mm und beträgt vorzugsweise 2,5 mm und ein vierter Radius R4 ist vorzugsweise in einem Bereich von 10 mm bis 15 mm und beträgt vorzugsweise 12 mm.

Ansonsten entspricht dieses Ausführungsbeispiel dem vorhergehenden Ausführungsbeispiel, sodass auf die dort gegebene Beschreibung verwiesen werden kann.

### Bezugszeichenliste

- 1: rotierbares Dentalinstrument
- 2: Arbeitsbereich
- 3: Schaft
- 4: abgerundete Spitze
- 5: erster konkaver Bereich
- 6: konvexer Bereich
- 7: zweiter konkaver Bereich
- 10: Zahn
- 11: Krone aus keramischem Material
- 21: erster Übergang
- 22: zweiter Übergang
- 23: dritter Übergang

- D1: erster Durchmesser
- D2: zweiter Durchmesser
- D3: dritter Durchmesser
- D4: vierter Durchmesser

- L: Gesamtlänge des Arbeitsbereichs
- L1: erste Länge
- L2: zweite Länge
- L3: dritte Länge
- L4: vierte Länge

- R1: erster Radius
- R2: zweiter Radius
- R3: dritter Radius
- R4: vierter Radius

- X-X: Axialrichtung des Dentalinstruments

## Patentansprüche

1. Dentalinstrument mit einem Arbeitsbereich (2) und einem Schaft (3),
wobei der Arbeitsbereich (2) mit abrasiven Partikeln, insbesondere Diamantpartikeln oder Hartmetallpartikeln, belegt ist, umfassend:
- eine abgerundete Spitze (4) mit einem ersten Radius (R1),
- einen sich an die Spitze (4) anschließenden ersten konkaven Bereich (5) mit einem zweiten Radius (R2),
- einen sich an den ersten konkaven Bereich (5) anschließenden konvexen Bereich (6) mit einem dritten Radius (R3) und
- einen sich an den konvexen Bereich (6) anschließenden zweiten konkaven Bereich (7) mit einem vierten Radius (R4),
- wobei ein größter Durchmesser (D1) des Arbeitsbereichs (2) am konvexen Bereich (6) angeordnet ist,
- wobei der größte Durchmesser (D1) am konvexen Bereich in der Mitte des Arbeitsbereichs (2) in Längsrichtung (X-X) des Dentalinstruments liegt.

2. Dentalinstrument nach Anspruch 1, wobei der größte Durchmesser (D1) in Axialrichtung (X-X) des Dentalinstruments mittig am konvexen Bereich angeordnet ist.

3. Dentalinstrument nach einem der vorhergehenden Ansprüche, wobei die abgerundete Spitze (4) eine Halbkugel ist.

4. Dentalinstrument nach Anspruch 3, wobei ein Enddurchmesser (D3) des zweiten konkaven Bereichs (7) an dem von der abgerundeten Spitze (4) abgewandten Ende des Arbeitsbereichs (2) größer ist als ein Durchmesser (D2) der abgerundeten Spitze (4).

5. Dentalinstrument nach einem der vorhergehenden Ansprüche, wobei der erste Radius (R1) der kleinste Radius des Arbeitsbereichs ist.

6. Dentalinstrument nach einem der vorhergehenden Ansprüche, wobei ein erster Übergang (21) zwischen der abgerundeten Spitze (4) und dem ersten konkaven Bereich und ein zweiter Übergang (22) zwischen dem ersten konkaven Bereich und dem konvexen Bereich und ein dritter Übergang (23) zwischen dem konvexen Bereich und dem zweiten konkaven Bereich jeweils kantenfrei ausgebildet sind.

7. Dentalinstrument nach einem der vorhergehenden Ansprüche, wobei eine erste Länge (L1) der abgerundeten Spitze (4) und eine dritte Länge (L3) des konvexen Bereichs (6) in Axialrichtung (X-X) kleiner sind als eine zweite Länge (L2) des ersten konkaven Bereichs und kleiner als eine vierte Länge (L4) des zweiten konkaven Bereichs (7).

8. Dentalinstrument nach Anspruch 7, wobei die zweite Länge (L2) und die vierte Länge (L4) gleich lang sind.

## Claims

1. A dental instrument comprising an operative portion (2) and a shaft (3),
the operative portion (2) being coated with abrasive particles, in particular diamond particles or hard metal particles, comprising:
- a rounded tip (4) having a first radius (R1),
- a first concave portion (5) adjacent to the tip (4) having a second radius (R2),
- a convex portion (6) adjacent to the first concave portion (5) having a third radius (R3) and
- a second concave portion (7) adjacent to the convex portion (6) having a fourth radius (R4),
- wherein a largest diameter (D1) of the operative portion (2) is arranged at the convex portion (6),
- wherein the largest diameter (D1) is located at the convex portion in the center of the operative portion (2) in the longitudinal direction (X-X) of the dental instrument.

2. The dental instrument according to claim 1, wherein the largest diameter (D1) is centrally arranged on the convex portion in the axial direction (X-X) of the dental instrument.

3. The dental instrument according to one of the preceding claims, wherein the rounded tip (4) is a hemisphere.

4. The dental instrument according to claim 3, wherein a final diameter (D3) of the second concave portion (7) is larger at the end of the operative portion (2) facing away from the rounded tip (4) than a diameter (D2) of the rounded tip (4).

5. The dental instrument according to one of the preceding claims, wherein the first radius (R1) is the smallest radius of the operative portion.

6. The dental instrument according to one of the preceding claims, wherein a first transition (21) between the rounded tip (4) and the first concave portion and a second transition (22) between the first concave portion and the convex portion and a third transition (23) between the convex portion and the second concave portion are each formed as being edge-free.

7. The dental instrument according to one of the preceding claims, wherein a first length (L1) of the rounded tip (4) and a third length (L3) of the convex portion (6) are smaller in the axial direction (X-X) than a second length (L2) of the first concave portion and are smaller than a fourth length (L4) of the second concave portion (7).

8. The dental instrument according to claim 7, wherein the second length (L2) and the fourth length (L4) are of equal length.

## Revendications

1. Instrument dentaire avec une zone de travail (2) et une tige (3),
dans lequel la zone de travail (2) est garnie de particules abrasives, en particulier de particules de diamant ou particules de métal dur, comprenant :
- une pointe arrondie (4) avec un premier rayon (R1),
- une première zone concave (5) se raccordant à la pointe (4) avec un deuxième rayon (R2),
- une zone convexe (6) se raccordant à la première zone concave (5) avec un troisième rayon (R3) et
- une seconde zone concave (7) se raccordant à la zone convexe (6) avec un quatrième rayon (R4),
- dans lequel un plus grand diamètre (D1) de la zone de travail (2) est agencé au niveau de la zone convexe (6),
- dans lequel le plus grand diamètre (D1) au niveau de la zone convexe se trouve au milieu de la zone de travail (2) dans la direction longitudinale (X-X) de l'instrument dentaire.

2. Instrument dentaire selon la revendication 1, dans lequel le plus grand diamètre (D1) dans la direction axiale (X-X) de l'instrument dentaire est agencé au milieu de la zone convexe.

3. Instrument dentaire selon l'une quelconque des revendications précédentes, dans lequel la pointe arrondie (4) est une demi-sphère.

4. Instrument dentaire selon la revendication 3, dans lequel un diamètre terminal (D3) de la seconde zone concave (7) au niveau de l'extrémité de la zone de travail (2) opposée à la pointe arrondie (4) est supérieur à un diamètre (D2) de la pointe arrondie (4).

5. Instrument dentaire selon l'une quelconque des revendications précédentes, dans lequel le premier rayon (R1) est le plus petit rayon de la zone de travail.

6. Instrument dentaire selon l'une quelconque des revendications précédentes, dans lequel un premier passage (21) entre la pointe arrondie (4) et la première zone concave et un deuxième passage (22) entre la première zone concave et la zone convexe et un troisième passage (23) entre la zone convexe et la seconde zone concave sont réalisés respectivement sans arête.

7. Instrument dentaire selon l'une quelconque des revendications précédentes, dans lequel une première longueur (L1) de la pointe arrondie (4) et une troisième longueur (L3) de la zone convexe (6) dans la direction axiale (X-X) sont plus petites qu'une deuxième longueur (L2) de la première zone concave et plus petites qu'une quatrième longueur (L4) de la seconde zone concave (7).

8. Instrument dentaire selon la revendication 7, dans lequel la deuxième longueur (L2) et la quatrième longueur (L4) ont la même longueur.
